# EUROPEAN PATENT SPECIFICATION

(11) **EP 2 533 487 B1**
(45) Date of publication and mention of the grant of the patent: **28.02.2018**
(21) Application number: 11782933.3
(22) Date of filing: 17.05.2011
(51) Int. Cl.: H04L 29/06, H04B 10/25, H04L 12/24, H04Q 11/00, H04L 12/26

(54) **METHOD, DEVICE AND OPTICAL LINE TERMINAL FOR TRANSMITTING PHYSICAL LAYER OPERATIONS, ADMINISTRATION AND MAINTENANCE (PLOAM) MESSAGES**
VERFAHREN, VORRICHTUNG UND OPTICAL LINE TERMINAL ZUR ÜBERTRAGUNG VON PLOAM-NACHRICHTEN
PROCÉDÉ, DISPOSITIF ET TERMINAL À LIGNE OPTIQUE PERMETTANT DE TRANSMETTRE DES MESSAGES D'OPÉRATION, ADMINISTRATION ET MAINTENANCE DE LA COUCHE PHYSIQUE (PLOAM)

(30) Priority: 21.05.2010 CN 201010181750
(43) Date of publication of application: 12.12.2012
(73) Proprietor: Sanechips Technology Co., Ltd., Shenzhen, Guangdong 518055 (CN)
(72) Inventor: ZHOU, Yixin, Shenzhen Guangdong 518057 (CN)
(74) Representative: Manitz Finsterwald Patentanwälte PartmbB
(86) International application number: PCT/CN2011/074172
(87) International publication number: WO 2011/144016

(56) References cited:
- WO-A1-2010/048791
- WO-A1-2010/048892
- CN-A- 101 409 708
- US-A1- 2009 263 130
- EFFENBERGER F ET AL: "Next-generation PON-part III: System specifications for XP-PON", IEEE COMMUNICATIONS MAGAZINE, IEEE SERVICE CENTER, PISCATAWAY, US, vol. 47, no. 11, 1 November 2009 (2009-11-01), pages 58-64, XP011284155, ISSN: 0163-6804, DOI: 10.1109/MCOM.2009.5307467
- FRANK J. EFFENBERGER ET AL.: 'Next-Generation PON-PartIII: System specifications for XG- PON' IEEE COMMUNICATIONS MAGAZINE 30 December 2009, pages 58 - 64, XP011279183

## Description

### Technical Field

The present invention relates to the field of optical network communications, and more especially, to a method, device and optical line terminal for transmitting Physical Layer Operations, Administration and Maintenance (PLOAM) messages.

### Background of the Related Art

The number of PLOAM messages in the framing sub-layers in the passive optical network and the next-generation passive optical network systems is different, and at the same time, the formats of the PLOAM messages in the two systems are also inconsistent.

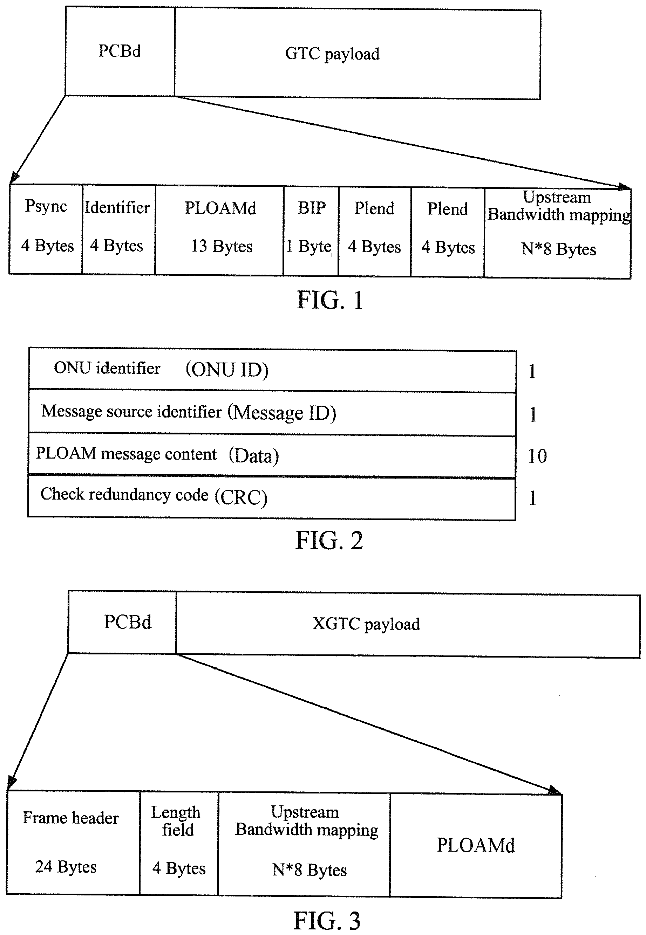

FIG. 1 is a structure diagram of the downlink frame in the passive optical network in the prior art, refer to FIG. 1, the PLOAM messages in the downlink frames in the passive optical network are stored in the PLOAMd in the frame information storage unit PCBd, wherein, it comprises only one PLOAM message. The format of the PLOAM messages in the downlink frame of the Passive optical network is shown in FIG. 2, and each PLOAM message specifically comprises: the optical network unit identifier (ONU ID), the message source identifier (Message ID), the PLOAM message content (Data), as well as the cyclic redundancy code (CRC). Wherein, the number of bytes occupied by the ONU ID, the Message ID, and the CRC is one respectively, the number of bytes occupied by the Data is 10, thus the total number of bytes occupied is 13.

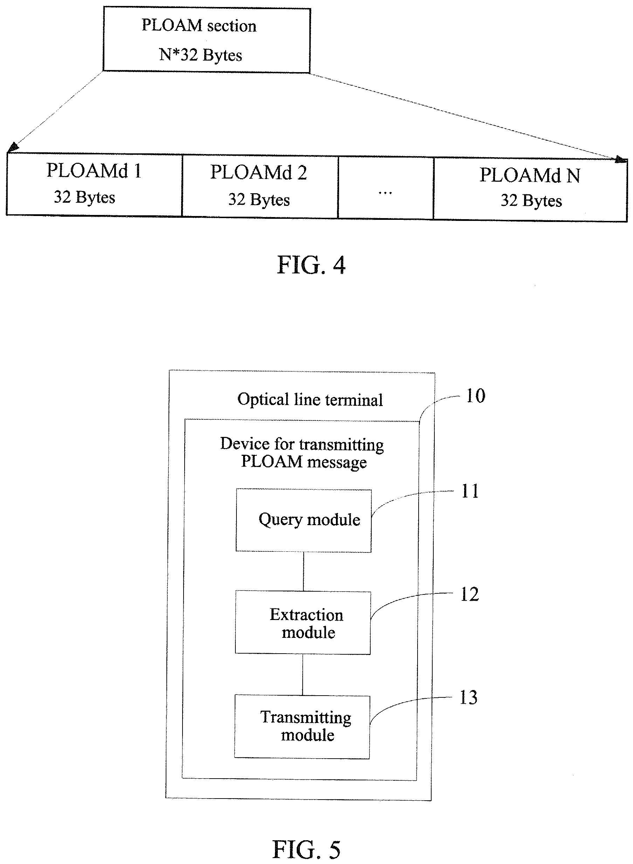

Refer to FIG. 3, the PLOAM messages in the downlink frames in the next-generation passive optical network are stored in the PLOAMd in the frame information storage unit PCBd; refer to FIG. 4, wherein, "PLOAM section N*32 bytes" indicates that the value of the number of said PLOAM messages is N, wherein, "N" can be any natural number in the range of 0∼255, the number of bytes of each PLOAM message is 32.

From the above description, it can be seen that in the prior art, the framing sublayer needs the PLOAM messages, the passive optical network system and the next-generation passive optical network system need to configure two different transmitting devices to send the PLOAM messages to the framing sublayer, and the compatibility cannot be achieved. US2009/0263130 addresses the problem of the incompatibility of GPON and next generation XGPON systems. It does this by modifying the PLOAM message and splicing or combining the multiple messages together.

### Summary of the Invention

The main purpose of the present invention is to provide a method, device and optical line terminal for sending PLOAM messages to achieve the compatibility of the passive optical network system and the next generation passive optical network system in transmitting PLOAM messages.

The present invention provides a device for transmitting physical layer operations, administration and maintenance messages, comprising:
a query module, which is used to query a value of a number of physical layer operations administration and maintenance messages to be sent after receiving application information from a framing sublayer;
an extraction module, which is used to, according to the value of the number of the physical layer operations, administration and maintenance messages, extract physical layer operations, administration and maintenance messages, the number of which is equal to said value;
a transmitting module, which is used to send the extracted physical layer operations, administration and maintenance messages to the framing sublayer.

Preferably, the query module is also used to query information about sending time mode of the physical layer operations, administration and maintenance messages. Preferably, the transmitting module is also used to, according to the queried information about the sending time mode of the physical layer operations, administration and maintenance messages, send the extracted physical layer operations, administration and maintenance messages to the framing sublayer in a corresponding sending time mode.

Preferably, the information about the sending time mode comprises: a value of sending time of a first physical layer operations, administration and maintenance message, a value of sending time interval between two physical layer operations, administration and maintenance messages. Preferably, the value of the number of the physical layer operations, administration and maintenance messages is 0, 1 or more.

Preferably, a number of bytes of the physical layer operations, administration and maintenance message is at least one.

The present invention also provides an optical line terminal, comprising a device for transmitting the aforementioned physical layer operations, administration and maintenance messages.

The present invention also provides a method for transmitting physical layer operations, administration and maintenance messages, comprising the steps of:
querying a value of a number of physical layer operations administration and maintenance messages to be sent after receiving application information from a framing sublayer;
according to the value of the number of the physical layer operations, administration and maintenance messages, extracting physical layer operations, administration and maintenance messages, the number of which is equal to said value;
sending the extracted physical layer operations, administration and maintenance messages to the framing sublayer.

Preferably, before the step of sending the extracted physical layer operations, administration and maintenance messages to the framing sublayer, the method also comprises:
querying information about sending time mode of the physical layer operations, administration and maintenance messages.

Preferably, the step of sending the extracted physical layer operations, administration and maintenance messages to the framing sublayer is specifically:
according to the queried information about the sending time mode of the physical layer operations, administration and maintenance messages, sending the extracted physical layer operations, administration and maintenance messages to the framing sublayer in a corresponding sending time mode.

Preferably, the information about the sending time mode comprises: a value of sending time of a first physical layer operations, administration and maintenance message, a value of sending time interval between two physical layer operations, administration and maintenance messages.

Preferably, the value of the number of the physical layer operation, administration and maintenance messages is 0, 1 or more.

Preferably, a number of bytes of the physical layer operations, administration and maintenance message is at least one.

The present invention provides a method, device and optical line terminal for sending physical layer operations, administration and maintenance (PLOAM) messages, to query the value of the number of PLOAM messages to be sent after receiving the application information from the framing sublayer; and according to the value of the number of the PLOAM messages, extract the PLOAM messages, the number of which is equal to the value, and send them to the framing sub-layer, to achieve the compatibility of the passive optical network system and the next generation passive optical network system in sending PLOAM messages.

### Brief Description of Drawings

FIG. 1 is a structure diagram of a downlink frame in a passive optical network in the prior art.
FIG. 2 is a structure diagram of the format of a PLOAM message in the passive optical network in the prior art.
FIG. 3 is a structure diagram of a downlink frame in the next-generation passive optical network in the prior art.
FIG. 4 is a structure diagram of the format of a PLOAM message in the next-generation passive optical network in the prior art.
FIG. 5 is a structure diagram of an embodiment of the device for transmitting PLOAM messages in accordance with the present invention.
FIG. 6 is a structure diagram of another embodiment of the device for transmitting PLOAM messages in accordance with the present invention.
FIG. 7 is a flow chart of an embodiment of the method for transmitting PLOAM messages in accordance with the present invention.
FIG. 8 is a flow chart of another embodiment of the method for transmitting PLOAM messages in accordance with the present invention.

### Preferred Embodiments of the Present Invention

It should be understood that the specific embodiments described herein are only used to explain the present invention and are not used to limit the present invention.

Refer to FIG. 5, the optical line terminal of the present invention is provided, and it comprises the device 10 for transmitting the PLOAM message, and the device 10 for transmitting the PLOAM message comprises: the query module 11, the extraction module 12 and the transmitting module 13; wherein,
the query module 11 is used to query the value of the number of PLOAM messages to be sent after receiving application information from a framing sublayer;
the extraction module 12 is used to, according to the value of the number of the PLOAM messages, extract the PLOAM messages, the number of which is equal to said value;
the transmitting module 13 is used to send the extracted PLOAM messages to the framing sublayer.

The value of the number of the aforementioned PLOAM messages is 0, 1 or more. The number of bytes of a PLOAM message is at least one.

Furthermore, the query module 11 is also used to query information about the sending time mode of the PLOAM messages. The transmitting module 13 is also used to, according to the queried information about the sending time mode of the PLOAM messages, send the extracted PLOAM messages to the framing sublayer in the corresponding sending time mode.

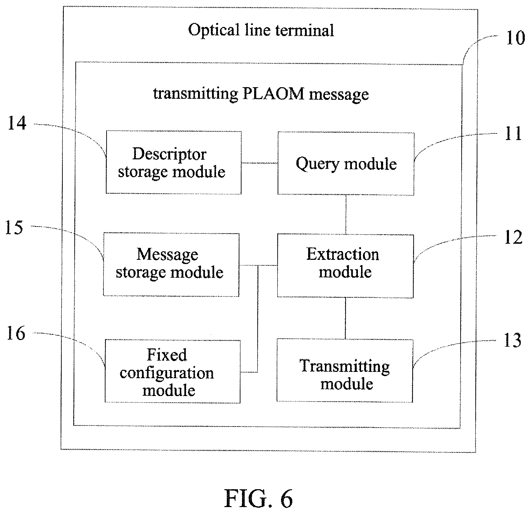

Refer to FIG. 6, in the aforementioned embodiment of the device for sending the PLOAM messages in the present invention, it might also comprise the message storage module 15, the descriptor storage module 14 and the fixed configuration module 16; wherein,
the message storage module 15 is used to store the PLOAM messages, and the message storage module 15 might be a First Input First Output (FIFO) data buffer, and the number of the stored PLOAM messages might be 0 or more. For example, one framing sublayer contains 256 optical network units (ONU), one ONU needs one PLOAM message, the number of bytes of one PLOAM message is 32, then the number of bytes of the PLOAM messages that need to be sent to this framing sublayer is 32*256=8192.

The number of the PLOAM messages and the number of bytes of each PLOAM message are recorded in the descriptors in the descriptor storage module 14.

The descriptor storage module 14 is used to store the descriptors, the information of the value of the number of the PLOAM messages, the information of the number of bytes contained in each PLOAM message, and the information about the sending time mode of the PLOAM messages. Each PLOAM message applied by the framing sublayer corresponds to one descriptor. The aforementioned information about the sending time mode comprises: the value of the sending time of the first PLOAM message, the value of the sending time interval between two PLOAM messages. For example, one descriptor might comprise the following information: MODE, DELAYFRM, PLOAM_CNT and PLOAM_LEN. Wherein, the MODE represents the sending time mode of the PLOAM message, and it comprises: one is "0", indicating that the absolute time is used, that is, it represents that when the time value is equal to DELAYFRM, start to send the PLOAM messages; the other is "1", indicating that the relative time is used, that is, it represents that after adding a DELAYFRM time on the basis of the current time value, start to send the PLOAM messages; through the sending time mode of the PLOAM messages, the time of sending the PLOAM messages can be strictly controlled, and compared to the prior art, it shortens the value of the time interval of sending the PLOAM messages and saves a lot of time.

The DELAYFRM indicates the time value for sending the first PLOAM message to the Framing sublayer.

The PLOAM_CNT indicates the value of the number of the PLOAM messages applied by said framing sublayer. The number of the PLOAM messages might be 0, 1 or more, "0" indicates that no PLOAM message is contained, in the existing passive optical network system, only one PLOAM message can be sent to the framing sublayer; in the next-generation passive optical network system, no PLOAM message, or one or more PLOAM messages might also be sent to the framing sublayer as desired. Therefore, according to the value of the number of the PLOAM messages in the descriptor, extract the PLOAM messages, the number of which is equal to the value, and in the case that there is no requirement on the number of bytes of the PLOAM message, it can achieve the compatibility of the passive optical network system and the next generation of passive optical network system in sending the PLOAM messages.

The PLOAM_LEN indicates the number of bytes of the PLOAM message. The number of bytes of the PLOAM message is at least 1, that is, the number of bytes of each PLOAM message might be one or more. The number of bytes of each PLOAM message in the existing passive optical network system is 13, and the number of bytes of each PLOAM message in the next-generation passive optical network system is 32. The number of bytes of each PLOAM message in this embodiment can be an arbitrary natural number; therefore, on the number of bytes of the PLOAM message, it can achieve the compatibility of the function of sending the PLOAM messages of the passive optical network system and the next generation of passive optical network system.

The fixed configuration module 16 is used to store the PLOAM messages with fixed configuration, and the fixedly configured PLOAM messages might be empty PLOAM messages. In the aforementioned embodiment, the PLOAM messages in the message storage module 15 correspond to the descriptors in the descriptor storage module 14 one by one, when there is no descriptor in the descriptor storage module 14, it indicates that there is no PLOAM message in the message storage module 15, at this time, it needs to extract one fixed PLOAM message from the fixed configuration module 16 and send it to the framing sublayer.

In addition, the device 10 for transmitting PLOAM message in the present invention is connected with an external microprocessor, and regularly queries whether the message storage module 15 is full of the PLOAM messages or not via the external microprocessor, if no, writes one PLOAM message needed by the framing sub-layer into the message storage module 15 and generates the corresponding descriptor, and stores the descriptor into the descriptor storage module 14. Therefore, the message storage module 15 can provide the PLOAM messages required by framing sublayer in a certain time period.

In this embodiment, the query module 11 is used to query the value of the number of the PLOAM messages to be sent, and then the extraction module 12 is used to extract the PLOAM messages, the number of which is equal to the value, and then, the transmitting module 13 sends the PLOAM messages to the framing sublayer, thus achieving the compatibility of the passive optical network system and the next-generation passive optical network system in sending the PLOAM messages.

The present invention also provides a device 10 for transmitting PLOAM message , the device for transmitting PLOAM message is the device for transmitting PLOAM message in the optical line terminal in the present invention, it can be set individually, or also can be set in the optical line terminal, and its internal structure and function will not be described here.

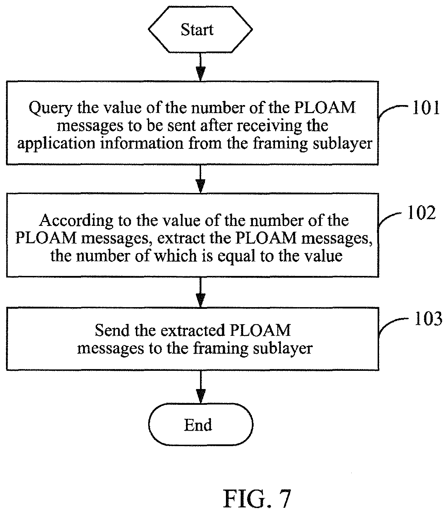

FIG. 7 provides an embodiment of the method for sending PLOAM messages in the present invention, comprising the following steps.

Step 101, query the value of the number of the PLOAM messages to be sent after receiving the application information from the framing sublayer.

Step 102, according to the value of the number of the PLOAM messages, extract the PLOAM messages, the number of which is equal to the value.

Step 103, send the extracted PLOAM messages to the framing sublayer.

The value of the number of the PLOAM messages is zero, one or more, the number of bytes of one PLOAM message is at least one, and the value and the number of bytes are recorded in the descriptor in the descriptor storage module.

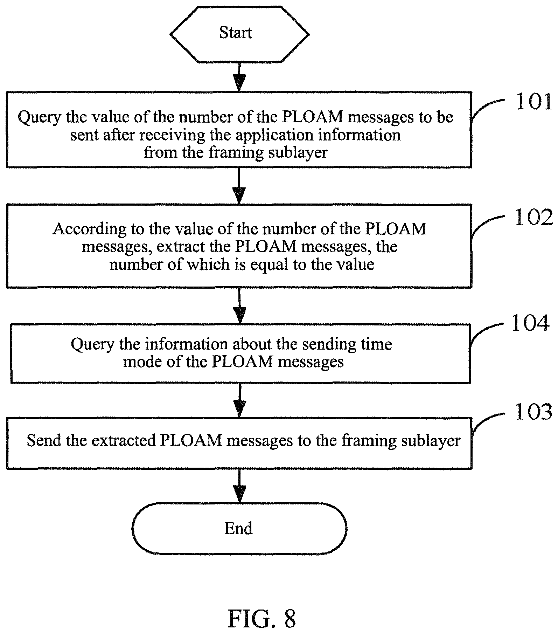

Furthermore, as shown in FIG. 8, it provides another embodiment of the method for sending the PLOAM messages in the present invention, before the aforementioned step 103, it also comprises:
step 104, query the information about the sending time mode of the PLOAM messages.

Furthermore, the aforementioned step 103 specifically is: according to the queried information about the sending time mode of the PLOAM message, send the extracted PLOAM messages to the framing sublayer in the corresponding sending time mode.

The aforementioned value of the number of the PLOAM messages, the number of bytes of each PLOAM message, and the sending time mode of the PLOAM message are recorded in the descriptor in the descriptor storage module 14. Each PLOAM message applied by the framing sublayer corresponds to one descriptor. The PLOAM messages are stored in the message storage module 15. Before sending the PLOAM messages, the value of the number of the PLOAM messages, the number of bytes contained in each PLOAM message, and information about the sending time mode of the PLOAM message are queried from the description storage module 14, and then the PLOAM messages, the number of which is equal to the value of the number of the PLOAM messages, are extracted from the message store module 15 and then sent to the framing sublayer in the sending time mode of the PLOAM message in the describer storage module 14.

The abovementioned information of the sending time mode comprises: the value of the sending time of the first PLOAM message, and the value of the sending time interval between two PLOAM messages. For example, one descriptor might comprise the following information: MODE, DELAYFRM, PLOAM_CNT and PLOAM_LEN. Wherein, the MODE denotes the sending time mode of the PLOAM message, the DELAYFRM denotes the time value of sending the first PLOAM message to the framing sublayer. When the MODE value is "0", it indicates that the absolute time is used, that is, it represents that when the time value is equal to the DELAYFRM, start to send the PLOAM messages; when the MODE value is "1", it indicates that the relative time is used, that is, it represents that after adding on DELAYFRM on the basis of the value of the current time, start to send the PLOAM messages; through the PLOAM message sending time mode, the time of sending the PLOAM messages can be strictly controlled, and compared to the prior art, it shortens the value of the time interval of sending the PLOAM messages, thus saving a lot of time.

The PLOAM_CNT indicates the value of the number of the PLOAM messages applied by said framing sublayer; the number of the PLOAM messages can be 0, 1 or more. "0" indicates that there is no PLOAM message, in the existing passive optical network system, only one PLOAM message can be sent to the framing sublayer. In the next-generation passive optical network system, no PLOAM message, or 1 or more PLOAM messages might be sent to the framing sublayer as desired. Therefore, according to the value of the number of the PLOAM messages in the descriptor, the PLOAM messages, the number of which is equal to the value, are extracted and in the case that there is no requirement on the number of bytes of the PLOAM message, the compatibility of the passive optical network system and the next generation optical passive network system in sending the PLOAM messages can be achieved.

The PLOAM_LEN indicates the number of bytes of one PLOAM message. The number of bytes of the PLOAM message is at least 1, that is, the number of bytes of each PLOAM message can be one or more. The number of bytes of each PLOAM message in the existing passive optical network system is 13, the number of bytes of each PLOAM message in the next-generation passive optical network system is 32. The number of bytes of the PLOAM message in this embodiment is at least one, therefore, the number of bytes of the PLOAM message can achieve the compatibility of the functions of the passive optical network system and the next-generation passive optical network system in sending the PLOAM messages.

In the aforementioned embodiment, the PLOAM messages in the message storage module correspond to the descriptors in the descriptor storage module one by one, in addition, when there is no describer in the descriptor storage module, it indicates that there is no PLOAM message in the message store module, at this time, one fixed PLOAM message needs to be extracted from the fixed configuration module and sent to the framing sublayer, the fixed PLOAM message might be one empty PLOAM message.

In addition, by the method for sending the PLOAM messages in the present invention, it also regularly queries whether the PLOAM messages in the message storage module are full or not through the external microprocessor timer, if no, then write one PLOAM message needed by the framing sublayer, and generate the corresponding descriptor and store the descriptor into the descriptor storage module. Therefore, the PLOAM messages required by the framing sublayer can be sent within a certain time period.

In this embodiment, according to the application information received from the framing sub-layer, the value of the number of the PLOAM messages to be sent is queried; according to the value the number of the PLOAM messages, the PLOAM messages, the number of which is equal to the value, are extracted and sent to the framing sub-layer to achieve the compatibility of the passive optical network system and the next-generation passive optical network system in sending the PLOAM messages.

It should be understood that the above description is only the preferred embodiments of the present invention and is not intended to limit the protection scope of the present invention, any equivalent structure or equivalent process transformation made by using the specification of the present invention and the content of the accompanying drawings, regardless of being directly or indirectly used in other related technical areas, should be similarly included in the protection scope of the present invention.

## Claims

1. A device for transmitting physical layer operations, administration and maintenance messages, the device comprising: a query module, an extraction and a transmitting module; wherein,
the query module is configured to query a value of a number of physical layer operations, administration and maintenance messages to be sent after receiving application information from a framing sublayer;
the extraction module is configured to, according to the value of the number of the physical layer operations, administration and maintenance messages, extract physical layer operations, administration and maintenance messages, the number of which is equal to said value;
the transmitting module is configured to send the extracted physical layer operations, administration and maintenance messages to the framing sublayer.

2. The device for transmitting physical layer operations, administration and maintenance messages of claim 1, wherein, the query module is also configured to query information about sending time mode of the physical layer operations, administration and maintenance messages.

3. The device for transmitting physical layer operations, administration and maintenance messages of claim 2, wherein, the transmitting module is also configured to, according to the queried information about the sending time mode of the physical layer operations, administration and maintenance messages, send the extracted physical layer operations, administration and maintenance messages to the framing sublayer in a corresponding sending time mode.

4. The device for transmitting physical layer operations, administration and maintenance messages of claim 2 or 3, wherein, the information about the sending time mode comprises: a value of sending time of a first physical layer operations, administration and maintenance message, a value of sending time interval between two physical layer operations, administration and maintenance messages.

5. The device for transmitting physical layer operations, administration and maintenance messages of claim 4, wherein, the value of the number of the physical layer operations, administration and maintenance messages is 0, 1 or more.

6. The device for transmitting physical layer operations, administration and maintenance messages of claim 5, wherein, a number of bytes of the physical layer operations, administration and maintenance message is at least one.

7. An optical line terminal, the optical line terminal comprising the aforementioned device for transmitting the physical layer operations, administration and maintenance messages of any one of claims 1-6.

8. A method for transmitting physical layer operations, administration and maintenance messages, the method comprising:
querying a value of a number of physical layer operations, administration and maintenance messages to be sent after receiving application information from a framing sublayer;
according to the value of the number of the physical layer operations, administration and maintenance messages, extracting physical layer operations, administration and maintenance messages, the number of which is equal to said value;
sending the extracted physical layer operations, administration and maintenance messages to the framing sublayer.

9. The method for transmitting physical layer operations, administration and maintenance messages of claim 8, wherein, before the step of sending the extracted physical layer operations, administration and maintenance messages to the framing sublayer, the method also comprises: querying information about sending time mode of the physical layer operations, administration and maintenance messages.

10. The method for transmitting physical layer operations, administration and maintenance messages of claim 9, wherein, sending the extracted physical layer operations, administration and maintenance messages to the framing sublayer is specifically:
according to the queried information about the sending time mode of the physical layer operations, administration and maintenance messages, sending the extracted physical layer operations, administration and maintenance messages to the framing sublayer in a corresponding sending time mode.

11. The method for transmitting physical layer operations, administration and maintenance messages of claim 9 or 10, wherein, the information about the sending time mode comprises: a value of sending time of a first physical layer operations, administration and maintenance message, a value of sending time interval between two physical layer operations, administration and maintenance messages.

12. The method for transmitting physical layer operations, administration and maintenance messages of claim 11, wherein, the value of the number of the physical layer operation, administration and maintenance messages is 0, 1 or more.

13. The method for transmitting physical layer operations, administration and maintenance messages of claim 12, wherein, a number of bytes of the physical layer operations, administration and maintenance message is at least one.

## Patentansprüche

1. Vorrichtung zum Übertragen von Botschaften zu Operationen, Verwaltung und Wartung einer physikalischen Schicht, wobei die Vorrichtung umfasst:
ein Abfragemodul, ein Extraktionsmodul und ein Übertragungsmodul; wobei
das Abfragemodul ausgestaltet ist, um einen Wert einer Anzahl von Botschaften zu Operationen, Verwaltung und Wartung einer physikalischen Schicht abzufragen, die nach dem Empfangen von Anwendungsinformationen von einer Framing-Teilschicht gesendet werden sollen;
das Extraktionsmodul ausgestaltet ist, um in Übereinstimmung mit dem Wert der Anzahl von Botschaften zu Operationen, Verwaltung und Wartung einer physikalischen Schicht Botschaften zu Operationen, Verwaltung und Wartung einer physikalischen Schicht zu extrahieren, deren Anzahl gleich dem besagten Wert ist;
das Übertragungsmodul ausgestaltet ist, um die extrahierten Botschaften zu Operationen, Verwaltung und Wartung einer physikalischen Schicht an die Framing-Teilschicht zu senden.

2. Vorrichtung zum Übertragen von Botschaften zu Operationen, Verwaltung und Wartung einer physikalischen Schicht nach Anspruch 1, wobei das Abfragemodul außerdem ausgestaltet ist, um Informationen über einen Sendezeitmodus der Botschaften zu Operationen, Verwaltung und Wartung einer physikalischen Schicht abzufragen.

3. Vorrichtung zum Übertragen von Botschaften zu Operationen, Verwaltung und Wartung einer physikalischen Schicht nach Anspruch 2, wobei das Übertragungsmodul außerdem ausgestaltet ist, um in Übereinstimmung mit den abgefragten Informationen über den Sendezeitmodus der Botschaften zu Operationen, Verwaltung und Wartung einer physikalischen Schicht die extrahierten Botschaften zu Operationen, Verwaltung und Wartung einer physikalischen Schicht in einem korrespondierenden Sendezeitmodus an die Framing-Teilschicht zu senden.

4. Vorrichtung zum Übertragen von Botschaften zu Operationen, Verwaltung und Wartung einer physikalischen Schicht nach Anspruch 2 oder 3, wobei die Informationen über den Sendezeitmodus umfassen: einen Wert eines Sendezeitpunkts einer ersten Botschaft zu Operationen, Verwaltung und Wartung einer physikalischen Schicht, einen Wert eines Sendezeitintervalls zwischen zwei Botschaften zu Operationen, Verwaltung und Wartung einer physikalischen Schicht.

5. Vorrichtung zum Übertragen von Botschaften zu Operationen, Verwaltung und Wartung einer physikalischen Schicht nach Anspruch 4, wobei der Wert der Anzahl der Botschaften zu Operationen, Verwaltung und Wartung einer physikalischen Schicht 0, 1 oder mehr ist.

6. Vorrichtung zum Übertragen von Botschaften zu Operationen, Verwaltung und Wartung einer physikalischen Schicht nach Anspruch 5, wobei eine Anzahl von Bytes der Botschaft zu Operationen, Verwaltung und Wartung einer physikalischen Schicht mindestens Eins ist.

7. Anschluss für eine optische Leitung, wobei der Anschluss für eine optische Leitung die vorstehend erwähnte Vorrichtung zum Übertragen von Botschaften zu Operationen, Verwaltung und Wartung einer physikalischen Schicht nach einem der Ansprüche 1 - 6 umfasst.

8. Verfahren zum Übertragen von Botschaften zu Operationen, Verwaltung und Wartung einer physikalischen Schicht, wobei das Verfahren umfasst, dass:
ein Wert einer Anzahl von Botschaften zu Operationen, Verwaltung und Wartung einer physikalischen Schicht abgefragt wird, die nach dem Empfangen von Anwendungsinformationen von einer Framing-Teilschicht gesendet werden sollen;
in Übereinstimmung mit dem Wert der Anzahl der Botschaften zu Operationen, Verwaltung und Wartung einer physikalischen Schicht Botschaften zu Operationen, Verwaltung und Wartung einer physikalischen Schicht extrahiert werden, deren Anzahl gleich dem besagten Wert ist;
die extrahierten Botschaften zu Operationen, Verwaltung und Wartung einer physikalischen Schicht an die Framing-Teilschicht gesendet werden.

9. Verfahren zum Übertragen von Botschaften zu Operationen, Verwaltung und Wartung einer physikalischen Schicht nach Anspruch 8, wobei das Verfahren vor dem Schritt des Sendens der extrahierten Botschaften zu Operationen, Verwaltung und Wartung einer physikalischen Schicht an die Framing-Teilschicht außerdem umfasst, dass: Informationen über einen Sendezeitmodus der Botschaften zu Operationen, Verwaltung und Wartung einer physikalischen Schicht abgefragt werden.

10. Verfahren zum Übertragen von Botschaften zu Operationen, Verwaltung und Wartung einer physikalischen Schicht nach Anspruch 9, wobei das Senden der extrahierten Botschaften zu Operationen, Verwaltung und Wartung einer physikalischen Schicht an die Framing-Teilschicht speziell darin besteht, dass:
in Übereinstimmung mit den abgefragten Informationen über den Sendezeitmodus der Botschaften zu Operationen, Verwaltung und Wartung einer physikalischen Schicht die extrahierten Botschaften zu Operationen, Verwaltung und Wartung einer physikalischen Schicht an die Framing-Teilschicht in einem korrespondierenden Sendezeitmodus gesendet werden.

11. Verfahren zum Übertragen von Botschaften zu Operationen, Verwaltung und Wartung einer physikalischen Schicht nach Anspruch 9 oder 10, wobei die Informationen über den Sendezeitmodus umfassen: einen Wert eines Sendezeitpunkts einer ersten Botschaft zu Operationen, Verwaltung und Wartung einer physikalischen Schicht, einen Wert eines Sendezeitintervalls zwischen zwei Botschaften zu Operationen, Verwaltung und Wartung einer physikalischen Schicht.

12. Verfahren zum Übertragen von Botschaften zu Operationen, Verwaltung und Wartung einer physikalischen Schicht nach Anspruch 11, wobei der Wert der Anzahl der Botschaften zu Operationen, Verwaltung und Wartung einer physikalischen Schicht 0, 1 oder mehr ist.

13. Verfahren zum Übertragen von Botschaften zu Operationen, Verwaltung und Wartung einer physikalischen Schicht nach Anspruch 12, wobei eine Anzahl von Bytes der Botschaft zu Operationen, Verwaltung und Wartung einer physikalischen Schicht mindestens Eins ist.

## Revendications

1. Dispositif pour transmettre des messages d'opérations, d'administration et de maintenance de couche physique, le dispositif comprenant : un module de demande, un module d'extraction et un module de transmission ; dans lequel
le module de demande est configuré pour demander une valeur d'un nombre de messages d'opérations, d'administration et de maintenance de couche physique à envoyer après la réception d'informations d'application en provenance d'une sous-couche de tramage ;
le module d'extraction est configuré pour, en fonction de la valeur du nombre des messages d'opérations, d'administration et de maintenance de couche physique, extraire des messages d'opérations, d'administration et de maintenance de couche physique, dont le nombre est égal à ladite valeur ;
le module de transmission est configuré pour envoyer les messages d'opérations, d'administration et de maintenance de couche physique extraits à la sous-couche de tramage.

2. Dispositif pour transmettre des messages d'opérations, d'administration et de maintenance de couche physique selon la revendication 1, dans lequel, le module de demande est également configuré pour demander des informations sur un mode de temps d'envoi des messages d'opérations, d'administration et de maintenance de couche physique.

3. Dispositif pour transmettre des messages d'opérations, d'administration et de maintenance de couche physique selon la revendication 2, dans lequel, le module de transmission est également configuré pour, en fonction des informations demandées sur le mode de temps d'envoi des messages d'opérations, d'administration et de maintenance de couche physique, envoyer les messages d'opérations, d'administration et de maintenance de couche physique extraits à la sous-couche de tramage dans un mode de temps d'envoi correspondant.

4. Dispositif pour transmettre des messages d'opérations, d'administration et de maintenance de couche physique selon la revendication 2 ou 3, dans lequel, les informations sur le mode de temps d'envoi comprennent : une valeur de temps d'envoi d'un premier message d'opérations, d'administration et de maintenance de couche physique, une valeur d'intervalle de temps d'envoi entre deux messages d'opérations, d'administration et de maintenance de couche physique.

5. Dispositif pour transmettre des messages d'opérations, d'administration et de maintenance de couche physique selon la revendication 4, dans lequel, la valeur du nombre des messages d'opérations, d'administration et de maintenance de couche physique est 0, 1 ou plus.

6. Dispositif pour transmettre des messages d'opérations, d'administration et de maintenance de couche physique selon la revendication 5, dans lequel, un nombre d'octets du message d'opérations, d'administration et de maintenance de couche physique est au moins un.

7. Terminal de ligne optique, le terminal de ligne optique comprenant le dispositif susmentionné pour transmettre les messages d'opérations, d'administration et de maintenance de couche physique selon l'une quelconque des revendications 1 à 6.

8. Procédé pour transmettre des messages d'opérations, d'administration et de maintenance de couche physique, le procédé comprenant :
la demande d'une valeur d'un nombre de messages d'opérations, d'administration et de maintenance de couche physique à envoyer après la réception d'informations d'application en provenance d'une sous-couche de tramage ;
en fonction de la valeur du nombre des messages d'opérations, d'administration et de maintenance de couche physique, l'extraction de messages d'opérations, d'administration et de maintenance de couche physique, dont le nombre est égal à ladite valeur ;
l'envoi des messages d'opérations, d'administration et de maintenance de couche physique extraits à la sous-couche de tramage.

9. Procédé pour transmettre des messages d'opérations, d'administration et de maintenance de couche physique selon la revendication 8, dans lequel, avant l'étape d'envoi des messages d'opérations, d'administration et de maintenance de couche physique extraits à la sous-couche de tramage, le procédé comprend également : la demande d'informations sur un mode de temps d'envoi des messages d'opérations, d'administration et de maintenance de couche physique.

10. Procédé pour transmettre des messages d'opérations, d'administration et de maintenance de couche physique selon la revendication 9, dans lequel, l'envoi des messages d'opérations, d'administration et de maintenance de couche physique extraits à la sous-couche de tramage est spécifiquement :
en fonction des informations demandées sur le mode de temps d'envoi des messages d'opérations, d'administration et de maintenance de couche physique, l'envoi des messages d'opérations, d'administration et de maintenance de couche physique extraits à la sous-couche de tramage dans un mode de temps d'envoi correspondant.

11. Procédé pour transmettre des messages d'opérations, d'administration et de maintenance de couche physique selon la revendication 9 ou 10, dans lequel, les informations sur le mode de temps d'envoi comprennent : une valeur de temps d'envoi d'un premier message d'opérations, d'administration et de maintenance de couche physique, une valeur d'intervalle de temps d'envoi entre deux messages d'opérations, d'administration et de maintenance de couche physique.

12. Procédé pour transmettre des messages d'opérations, d'administration et de maintenance de couche physique selon la revendication 11, dans lequel, la valeur du nombre des messages d'opérations, d'administration et de maintenance de couche physique est 0, 1 ou plus.

13. Procédé pour transmettre des messages d'opérations, d'administration et de maintenance de couche physique selon la revendication 12, dans lequel, un nombre d'octets du message d'opérations, d'administration et de maintenance de couche physique est au moins un.
